# EUROPEAN PATENT SPECIFICATION

(11) **EP 4 054 049 B1**
(45) Date of publication and mention of the grant of the patent: **29.05.2024**
(21) Application number: 20914827.9
(22) Date of filing: 17.11.2020
(51) Int. Cl.: H02J 7/00, H04W 88/08, H02J 50/80, H02J 50/20, H02J 50/90

(54) **CHARGING CONTROL METHOD AND DEVICE**
LADESTEUERUNGSVERFAHREN UND VORRICHTUNG
PROCÉDÉ ET DISPOSITIF DE COMMANDE DE CHARGE

(30) Priority: 21.01.2020 CN 202010072815
(43) Date of publication of application: 07.09.2022
(73) Proprietor: Huawei Technologies Co., Ltd., Shenzhen, Guangdong 518129 (CN)
(72) Inventor: MA, Liqiang, Shenzhen, Guangdong 518129 (CN)
(74) Representative: Gill Jennings & Every LLP
(86) International application number: PCT/CN2020/129328
(87) International publication number: WO 2021/147490

(56) References cited:
- EP-A1- 3 493 361
- CN-A- 102 801 199
- CN-A- 104 348 196
- CN-A- 104 348 196
- CN-A- 105 720 633
- CN-A- 106 169 799
- CN-A- 106 201 966
- CN-A- 111 277 013
- JP-A- 2001 327 094

## Description

### TECHNICAL FIELD

Embodiments of this application relate to the field of electronic technologies, and in particular, to a charging control method and a device.

### BACKGROUND

With development of mobile communications technologies, popularization of 4G long term evolution (LTE) communication, commercial use of 5G communication, and the like, an increasing quantity of users go online through a mobile communications network by using a wireless access device. For example, when there is no wireless network Wi-Fi on a business trip with a notebook, or when it is inconvenient to go online by using a mobile phone, a wearable device, or a tablet computer during outdoor travel, a user may go online through the mobile communications network by using the wireless access device to process a data service. Some wireless access devices may further have a function of a mobile power pack, to charge a terminal such as a mobile phone or a wearable device while providing a network access capability for the terminal. EP 3 493 361 A1 discusses a wireless charging system, a wireless charging device, a wireless charging method, and a device to be charged. CN 106 201 966 A discusses an OTG (on the go) connection control method, main equipment and terminal equipment. CN 104 348 196 A discusses a mobile communication terminal and an external charging method thereof, which relate to the field of an intelligent terminal and are used for solving the problems that when the intelligent terminal is charged by a wireless router, the data transmission service is carried out by the wireless router, the load of the wireless router is large, the data service can be interrupted or the charging can be interrupted due to the rising of temperature of the wireless router, and the wireless router can even be shut down.

### SUMMARY

Embodiments of this application provide a charging control method and a device, so that a wireless access device may limit a maximum output current for external charging in a fast charging mode. This provides better charging user experience.

To achieve the foregoing objective, the following technical solutions are used in the embodiments of this application. The invention is defined by the features of the independent claims 1 and 8. Preferred embodiments are defined in the dependent claims.

A first aspect of the embodiments of this application provides a charging control method. The method is defined by independent method claim 1.

In this solution, after starting the wireless communications module, a portable Wi-Fi hotspot may determine, in real time based on a network type of the accessed mobile network and/or the power status of a battery, that the external charging state is the current-limiting state or the normal state, and perform external charging by using the determined external charging state. When the external charging state is the current-limiting state, the portable Wi-Fi hotspot may charge another device based on a relatively small first maximum output current corresponding to the current-limiting state in a fast charging mode with high charging power. This can reduce overall power consumption of the portable Wi-Fi hotspot, and avoid a problem such as charging exception protection triggered because power consumption is greater than maximum output power. Compared with charging in a standard charging mode with low charging power, current-limiting charging in the fast charging mode can increase external charging power and an external charging speed, and provide faster charging user experience.

In a possible design, that the wireless access device determines an external charging state based on a network state of an accessed communications network and/or a power status of the wireless access device includes: If the wireless access device determines that a preset condition is met, the wireless access device determines that the external charging state is the current-limiting state. The preset condition includes: a network type of the accessed communications network is a 5G network or a battery level of the wireless access device is less than a preset value. If the wireless access device determines that the preset condition is not met, the wireless access device determines that the external charging state is the normal state.

Therefore, if the network type of the accessed communications network is the 5G network or the battery level of the wireless access device is less than the preset value, the wireless access device may determine that the external charging state is the current-limiting state, so as to charge another device based on the relatively small first maximum output current corresponding to the current-limiting state. This reduces overall power consumption of the portable Wi-Fi hotspot, and avoids a problem such as charging exception protection triggered because power consumption is greater than maximum output power.

For example, the second charging voltage corresponding to the normal state is 9 V, and the second maximum output current is 2 A; or the second charging voltage corresponding to the normal state is 5 V, and the second maximum output current is 4.5 A.

For example, when the second charging voltage corresponding to the normal state is 9 V, and the second maximum output current is 2 A, the first maximum output current is 1.5 A.

In another possible design, the method further includes: after disabling the wireless communications module, the wireless access device performs external charging by using the charging parameter corresponding to the normal state.

Therefore, when the portable Wi-Fi hotspot disables the wireless communications module, the portable Wi-Fi hotspot performs external charging by using a charging parameter corresponding to the fast charging mode. This can improve external charging efficiency as much as possible, and improve fast-charging user experience.

In another possible design, the wireless communications module includes a mobile communications module and a Wi-Fi module.

Therefore, the wireless access device may perform network access through the mobile communications module, and start another device to perform network access through the Wi-Fi module by using a Wi-Fi signal.

In another further possible design of the first aspect, this application further provides a charging control method according dependent claim 7.

In this solution, after starting the wireless communications module, a portable Wi-Fi hotspot may first set the external charging state as the current-limiting state. This avoids charging exception caused because power consumption of the portable Wi-Fi hotspot is greater than provided maximum output power when the portable Wi-Fi hotspot accesses a 5G network or a battery level of the portable Wi-Fi hotspot is less than a preset value. Then, the Wi-Fi hotspot sets the external charging state as the normal state or the current-limiting state in real time based on the type of the accessed network and/or the power status.

Another aspect of the embodiments of this application provides a wireless access device as defined by independent device claim 8.

In a possible design, the determining the external charging state based on the network state of the accessed communications network and/or the power status includes: if it is determined that a preset condition is met, determining that the external charging state is the current-limiting state, where the preset condition includes: a network type of the accessed communications network is a 5G network or a battery level of the wireless access device is less than a preset value; or if it is determined that the preset condition is not met, determining that the external charging state is the normal state.

In another possible design, the second charging voltage corresponding to the normal state is 9 V, and the second maximum output current is 2 A; or the second charging voltage corresponding to the normal state is 5 V, and the second maximum output current is 4.5 A.

In another possible design, when the second charging voltage corresponding to the normal state is 9 V, and the second maximum output current is 2 A, the first maximum output current is 1.5 A.

In another possible design, when the code is executed by the wireless access device, the wireless access device is started to perform the following step: after disabling the wireless communications module, performing external charging by using the charging parameter corresponding to the normal state.

In another possible design, the wireless communications module includes a mobile communications module and a Wi-Fi module.

For beneficial effects corresponding to the foregoing other aspects, refer to the descriptions of the beneficial effects in the method aspects. Details are not described herein again.

### BRIEF DESCRIPTION OF DRAWINGS

FIG. 1 is a schematic diagram of a communications system according to an embodiment of this application;
FIG. 2(a) and FIG. 2(b) are an interface diagram of a group of charging processes according to the conventional technology;
FIG. 3 is a schematic architectural diagram of a wireless access device according to an embodiment of this application;
FIG. 4A is a flowchart of a charging control method according to an embodiment of this application;
FIG. 4B is a flowchart of another charging control method according to an embodiment of this application;
FIG. 5A is a schematic diagram of a wired charging mode according to an embodiment of this application;
FIG. 5B is a schematic diagram of a wireless charging mode according to an embodiment of this application;
FIG. 5C is a schematic diagram of a charging process according to an embodiment of this application;
FIG. 6 is a flowchart of another charging control method according to an embodiment of this application; and
FIG. 7 is a schematic diagram of a structure of another wireless access device according to an embodiment of this application.

### DESCRIPTION OF EMBODIMENTS

The following describes the technical solutions, labelled as embodiments of this application, that are examples of embodiments that are not necessarily claimed with reference to the accompanying drawings. In descriptions of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in the embodiments of this application, "a plurality of" means two or more than two.

The following terms "first" and "second" are merely intended for a purpose of description, and shall not be understood as an indication or implication of relative importance or implicit indication of the quantity of indicated technical features. Therefore, a feature limited by "first" or "second" may explicitly or implicitly include one or more features. In the descriptions of the embodiments, unless otherwise stated, "a plurality of" means two or more than two.

A wireless access device may access a communications network based on a first communications technology, and forward, by using a second communications technology, a network signal that is based on the first communications technology, so that a terminal can perform network access by using a communications signal that is based on the second communications technology. The wireless access device may supply power by using a battery, so that a user can carry the wireless access device and use the wireless access device to perform network access at any time by using the terminal. The wireless access device may provide a wireless network access capability for the user in a scenario such as a mobile office, a business trip, or vehicle-mounted coverage.

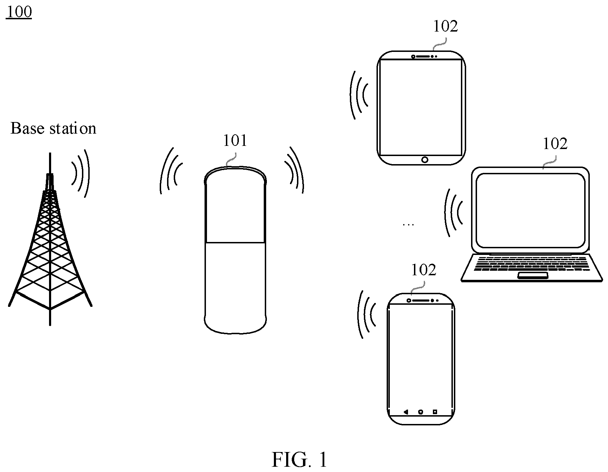

The embodiments of this application provide a charging control method. The method may be applied to a communications system 100 shown in FIG. 1. As shown in FIG. 1, the communications system 100 may include a wireless access device 101 and a station device 102. The wireless access device 101 may perform network access based on a first communications technology, receive a communications signal that is based on the first communications technology, and send the communications signal based on a second communications technology, so that the station device 102 can perform network access by using a communications signal that is based on the second communications technology. It may also be understood that the wireless access device 101 may convert a network access capability that is based on the first communications technology into a network access capability that is based on the second communications technology, so that a terminal can perform network access based on the second communications technology.

For example, the first communications technology and the second communications technology may be any two communications technologies of 2G/3G/4G/5G cellular mobile communication (or referred to as mobile communication), fiber-optic communication, Bluetooth (BT), a wireless local area network (WLAN) (such as Wi-Fi), ZigBee, frequency modulation (FM), near field communication (NFC), an infrared (IR) technology, a universal 2.4G/5G frequency band wireless communications technologies, and USB communication. For example, the first communications technology may be a 4G long term evolution (LTE) communications technology, and the second communications technology may be a Wi-Fi communications technology. For another example, the first communications technology may be a 5G non-standalone (NSA) communications technology or a standalone (SA) communications technology, and the second communications technology may be a Wi-Fi communications technology. For another example, the first communications technology may be a fiber-optic communications technology, and the second communications technology may be a Wi-Fi communications technology. For another example, the first communications technology may be a cellular mobile communications technology, and the second communications technology may be a universal serial bus (USB) communications technology.

It may be understood that the first communications technology and the second communications technology may alternatively be other communications technologies that are not listed in the embodiments of this application. A specific type of the communications technology is not limited in the embodiments of this application.

The wireless access device 101 in FIG. 1 may be a device such as a wireless router, a wireless access point (AP), or a mobile hotspot. For example, the wireless access device 101 may be specifically wireless customer-premises equipment (CPE) or a Wi-Fi modem. The wireless access device 101 may alternatively be another device that has a wireless access function and an external charging function provided in the embodiments of this application, for example, a mobile phone, a tablet computer, a notebook computer, an ultra-mobile personal computer (UMPC), a personal digital assistant (PDA), a smartwatch, or an augmented reality (AR) device/a virtual reality (VR) device.

The wireless access device 101 may supply power by using a battery of the wireless access device 101, so that a user can carry the wireless access device 101 and use the wireless access device 101 to perform network access at any time by using the station device 102. The wireless access device 101 may further perform external charging based on a battery level.

The station device 102 in FIG. 1 may be a terminal device that performs network access by using the communications signal that is based on the second communications technology and that is provided by the wireless access device 101 when the wireless access device 101 performs network access. For example, the station device 102 may be a device such as a mobile phone, a tablet computer, a notebook computer, a wearable device, a vehicle-mounted device, or an augmented reality (AR) device/a virtual reality (VR) device. A specific type of the station device 102 is not limited in the embodiments of this application.

When the first communications technology is a cellular mobile communications technology, and the second communications technology is a Wi-Fi communications technology, the wireless access device 101 may perform network access based on a cellular mobile network signal, and provide a Wi-Fi signal, so that the terminal can perform network access based on the Wi-Fi signal. In a case in which the wireless access device 101 can supply power by using the battery of the wireless access device 101, to start the user to carry the wireless access device 101 and use the wireless access device 101 to perform network access at any time by using the station device 102, the wireless access device 101 may also be referred to as a portable Wi-Fi hotspot.

In the conventional technology, there is a 4G portable Wi-Fi hotspot that supports external charging. To be specific, the 4G portable Wi-Fi hotspot can perform network access based on a 4G cellular mobile network signal, and provide a Wi-Fi signal, so that a terminal performs network access by using the Wi-Fi signal, and supports external charging. The 4G portable Wi-Fi hotspot that supports external charging performs external charging by using a charging parameter 5 V/2 A, and corresponding maximum charging power is 10 W. The 4G portable Wi-Fi hotspot that supports external charging performs external charging in relatively low power and a relatively low rate. As a result, charging user experience is relatively poor.

As a next-generation technology of 4G, 5G is a development trend of the mobile communications network. The 5G mobile communications network may include a non-standalone NSA network and a standalone SA network. Although 5G provides a high-bandwidth and high-speed mobile communications technology, a power consumption problem of a network device is increasingly prominent. For example, power consumption of a modem in the network device in the 5G network is more than twice that in the 4G network. For a portable Wi-Fi hotspot that supports external charging, how to bring faster charging user experience when a user enjoys a data service by using a portable Wi-Fi hotspot is an urgent problem to be resolved.

A portable Wi-Fi hotspot working in the 5G network may perform external charging by using a charging parameter corresponding to a fast charging mode with high charging power, or may perform external charging by using a charging parameter corresponding to low charging power. For example, the charging parameter corresponding to the fast charging mode with high charging power may be 9 V/2 A, where 9 V/2 A indicates that a second charging voltage for external charging is 9 V, a second maximum output current for external charging is 2 A, and corresponding maximum charging power is 18 W. For another example, the charging parameter corresponding to the fast charging mode with high charging power may be 5 V/4.5 A, where 5 V/4.5 A indicates that a second charging voltage for external charging is 5 V, a second maximum output current for external charging is 4.5 A, and corresponding maximum charging power is 22.5 W.

For example, the charging parameter corresponding to the fast charging mode with low charging power may be 5 V/2 A, where 5 V/2 A indicates that a second charging voltage for external charging is 5 V, a second maximum output current for external charging is 2 A, and corresponding maximum charging power is 10 W. For another example, the charging parameter corresponding to the fast charging mode with low charging power may be 5 V/1 A, where 5 V/1 A indicates that a second charging voltage for external charging is 5 V, a second maximum output current for external charging is 1 A, and corresponding maximum charging power is 5 W.

However, for the portable Wi-Fi hotspot working in the 5G network, power consumption of the portable Wi-Fi hotspot for supporting a data service is relatively high. If the portable Wi-Fi hotspot performs external charging by using the charging parameter corresponding to the fast charging mode with high charging power, power consumption of the portable Wi-Fi hotspot for external charging is relatively high. A sum of the power consumption of the portable Wi-Fi hotspot and fast charging power consumption easily exceeds maximum output power that can be provided by a battery of the portable Wi-Fi hotspot. As a result, charging exception protection is easily triggered, causing a problem such as charging termination.

The following uses a portable Wi-Fi hotspot as an example.

For example, it is assumed that a battery of the portable Wi-Fi hotspot can provide maximum output power of 30.4 W. In 5G communication, power consumption of the portable Wi-Fi hotspot can be 6.8 W when there is a data service. When the portable Wi-Fi hotspot performs external charging by using an 18-W fast charging mode corresponding to 9 V/2 A, power consumption required by the fast charging can be 24 W, and external charging efficiency is 75%. In this case, a sum of 6.8 W and 24 W is 30.8 W, and exceeds the maximum output power 30.4 W that can be provided by the battery. As a result, a problem such as charging exception protection is easily triggered.

In addition, the maximum output power that can be provided by the battery of the portable Wi-Fi hotspot is related to a battery level. A higher battery level indicates higher maximum output power that can be provided by the battery. A lower battery level indicates lower maximum output power that can be provided by the battery. When the battery level of the portable Wi-Fi hotspot is low, if the portable Wi-Fi hotspot performs external charging by using the fast charging mode, a sum of the power consumption of the portable Wi-Fi hotspot and the fast charging power consumption may exceed the maximum output power that can be provided by the portable Wi-Fi hotspot. As a result, the charging exception protection is easily triggered, causing a problem such as charging termination. Even in a 4G network with low power consumption, when the battery level of the portable Wi-Fi hotspot is low, a sum of the power consumption of the portable Wi-Fi hotspot and the fast charging power consumption may easily exceed the maximum output power that can be provided by the battery.

For example, it is assumed that the battery level of the portable Wi-Fi hotspot is relatively low (for example, the battery level is less than 8%) and the battery of the portable Wi-Fi hotspot can provide maximum output power of 27.6 W. In the 4G communication, power consumption of the portable Wi-Fi hotspot can be 3.8 W when there is a data service. When the portable Wi-Fi hotspot performs external charging by using the 18-W fast charging mode corresponding to 9 V/2 A, the power consumption required by the fast charging can be 24 W, and external charging efficiency is 75%. A sum of 3.8 W and 24 W is 27.8 W, and exceeds the maximum output power 27.6 W that can be provided by the battery. As a result, a problem such as charging exception protection is easily triggered.

In a charging control solution, when a portable Wi-Fi hotspot processes a data service in a 4G network or in a 5G network, the portable Wi-Fi hotspot performs external charging by using a charging parameter 5 V/2 A corresponding to a standard charging mode with low charging power, to avoid a problem such as charging exception protection triggered because power consumption of the portable Wi-Fi hotspot is greater than maximum output power. In this solution, the portable Wi-Fi hotspot cannot perform fast charging on another device, and charging user experience is relatively poor.

In another charging control solution, when a portable Wi-Fi hotspot processes a data service in a 5G network, the portable Wi-Fi hotspot performs external charging by using a charging parameter 5 V/2 A corresponding to a standard charging mode with low charging power, to avoid a problem such as charging exception protection triggered because power consumption is greater than maximum output power. When the portable Wi-Fi hotspot processes a data service in a 4G network and a battery level is relatively high, the portable Wi-Fi hotspot switches to a charging parameter 9 V/2 A corresponding to a fast charging mode with high charging power and performs external charging, to provide faster charging user experience. When the portable Wi-Fi hotspot processes the data service in the 4G network and the battery level is relatively low, the portable Wi-Fi hotspot switches to a charging parameter 5 V/2 A and performs external charging, to avoid a problem such as charging exception protection triggered because power consumption is greater than maximum output power.

In this solution, the portable Wi-Fi hotspot frequently switches between the standard charging mode corresponding to 5 V/2 A and the fast charging mode corresponding to 9 V/2 A. Switching a charging mode of the portable Wi-Fi hotspot interrupts charging initiated based on a charging mode before the switching, and requires initiating a new charging process based on a charging mode after the switching. For a charged terminal, when the charging mode is switched and the charging is re-initiated, the terminal has a corresponding response prompt. For example, a screen of the terminal may be lit up once, the terminal may have a ding sound, or the terminal may vibrate. This frequently disturbs the user, and the user may easily think that the device is faulty. As a result, charging user experience is relatively poor.

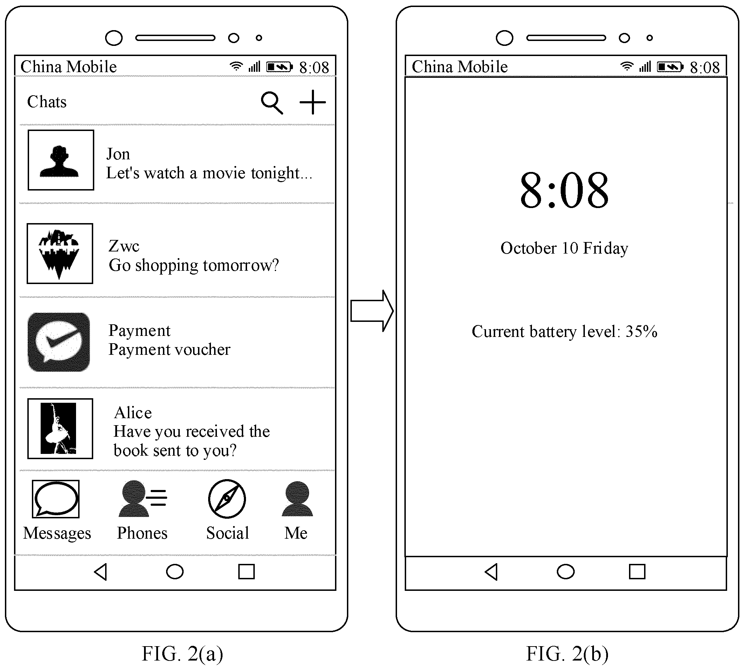

For example, an external charging device of a portable Wi-Fi hotspot is a mobile phone. Referring to FIG. 2(a) and FIG. 2(b), when a charging mode is switched, the mobile phone displays battery information and makes a "ding" sound. This interrupts current use of a user and disturbs the user. As a result, user use experience is relatively poor.

Embodiments of this application provide a charging control method, so that a wireless access device such as a Wi-Fi hotspot may limit a maximum output current for external charging in a fast charging mode, to provide better charging user experience.

In some embodiments, the portable Wi-Fi hotspot may perform external charging negotiation by using a charging parameter corresponding to the fast charging mode, and dynamically determines, based on a network state of a communications network that is accessed by the portable Wi-Fi hotspot based on a first communications technology and/or a battery level state, whether to perform external charging in a manner of limiting the maximum output current for external charging in the fast charging mode. For example, the portable Wi-Fi hotspot may be a device such as a wireless router or a mobile phone that has a 4G/5G mobile communication function, a Wi-Fi hotspot function, and an external charging function.

For example, when a 5G network is accessed, power consumption of the wireless access device such as the portable Wi-Fi hotspot is relatively high. The portable Wi-Fi hotspot may perform charging negotiation based on the fast charging mode with high charging power, and perform external charging in the manner of limiting the maximum output current for external charging in the fast charging mode. For example, the portable Wi-Fi hotspot may perform negotiation by using the fast charging mode corresponding to 9 V/2 A, and limit the maximum output current for external charging from a second maximum output current 2 A to a first maximum output current 1.5 A. This reduces an external charging current of the portable Wi-Fi hotspot, reduces overall power consumption of the portable Wi-Fi hotspot, and avoids a problem such as charging exception protection triggered because actual power consumption is greater than maximum output power. Compared with charging in a standard charging mode with low charging power, current-limiting charging in the fast charging mode can increase external charging power and an external charging speed, and provide faster charging user experience.

When a 4G network is accessed and a battery level is relatively low, both power consumption of the wireless access device and maximum output power that can be provided by the wireless access device are relatively low. The wireless access device may perform charging negotiation by using the fast charging mode corresponding to the high charging power, and perform external charging in the manner of limiting the maximum output current for external charging in the fast charging mode. Compared with charging in a standard charging mode with low charging power, current-limiting charging in the fast charging mode can increase external charging power and an external charging speed, and provide faster charging user experience.

When a 4G network is accessed and a battery level is relatively high, power consumption of the wireless access device is relatively low, and maximum output power that can be provided by the wireless access device is relatively high. The wireless access device may perform external charging by using the charging parameter corresponding to the fast charging mode corresponding to the high charging power. Compared with charging in a standard charging mode with low charging power, external charging by using the charging parameter corresponding to the fast charging mode can increase external charging power and an external charging speed, and provide faster charging user experience.

In this solution, when the network state changes or the state of charge of a battery changes, the wireless access device may perform external negotiation charging by using the same fast charging mode. Therefore, a charging mode is not frequently switched, and interference to the user can be reduced. This solution also provides faster charging user experience when the user enjoys a data service.

In some embodiments, the wireless access device may include a wireless communications module. The wireless communications module may include a first communications module used in the first communications technology and a second communications module used in the second communications technology. For example, the first communications module may be a mobile communications module (or referred to as a cellular mobile communications module), and the second communications module may be a Wi-Fi module.

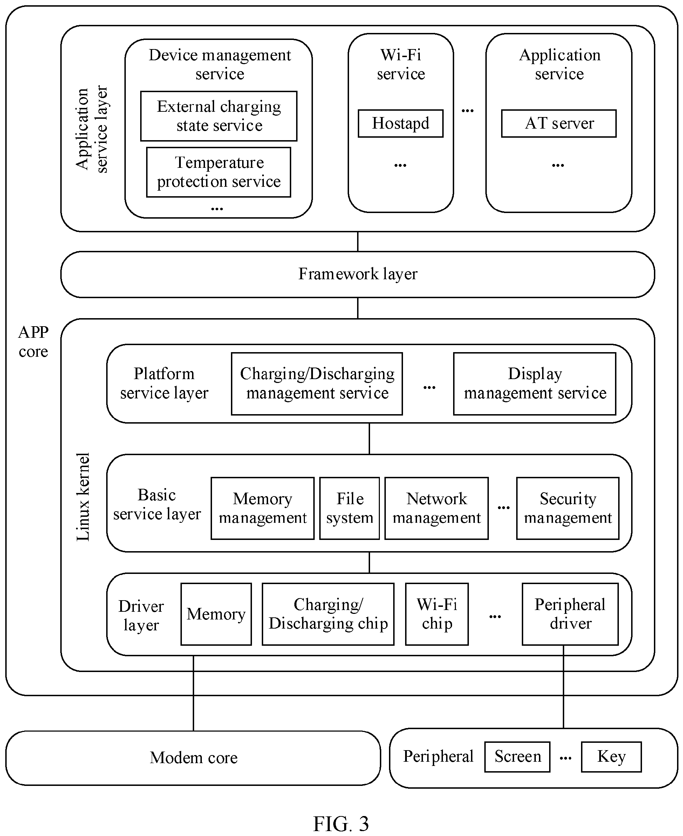

When the first communications technology is a cellular mobile communications technology, and the second communications technology is a Wi-Fi communications technology, for example, FIG. 3 is a schematic architectural diagram of a wireless access device. As shown in FIG. 3, the wireless access device may include peripheral, a modem core, and an application (APP) core. The app core may include an application service layer, a framework layer, a Linux kernel, and the like.

The application service layer may include a device management service, a Wi-Fi service, an application service (AT server), or the like.

The device management service may include an external charging state service, a temperature protection service, or the like. The external charging state service may implement setting and switching of an external charging state. The external charging state may include a current-limiting state or a normal state.

The Wi-Fi service is used to implement a Wi-Fi-related service. The Wi-Fi service may include hostapd. The hostapd is a daemon process used by the wireless access device and an authentication server in a user mode to implement access management and authentication related to a radio local area network.

The application service may include an AT server and other services. The AT server may be configured to provide an API interface of the modem core, control the modem core to enter different states, and query a current state of the modem core, for example, query a network state such as a network type of a mobile network currently accessed by the modem core.

The framework layer shown in FIG. 3 is configured to provide an application programming interface (API) and a programming framework for the application service layer. The framework layer may include some predefined functions.

The Linux kernel shown in FIG. 3 may include a platform service layer, a basic service layer, a driver layer, and the like. The platform service layer includes a charging/discharging management service, a display management service, or the like. The basic service layer includes memory management, file system management, network management, and security management. The driver layer includes a memory driver, a USB driver, a charging/discharging chip, a Wi-Fi chip, a peripheral driver, or the like.

The charging/discharging management service may implement internal/external charging, and may further monitor a parameter such as a battery capacity, a quantity of battery cycles, or a battery health state (electric leakage and impedance). When a sum of power consumption of the wireless access device and external charging power consumption is greater than maximum output power that can be provided by a battery of the wireless access device, the charging/discharging management service triggers charging exception protection.

The Wi-Fi chip may be configured to send and receive a Wi-Fi frame. Some Wi-Fi chips may further automatically send a beacon frame, a probe response frame, or the like.

The charging/discharging chip may be configured to receive charging input from the outside or charge another external device in a wired or wireless manner. For example, the charging/discharging chip may perform internal/external charging by using a USB port, or may perform internal/external charging by using a wireless charging coil. In addition, the charging/discharging chip may further include a battery. The charging/discharging chip may further respond to query of an external charging state service, and report a battery level state.

The modem core shown in FIG. 3 may be configured to implement 2G/3G/4G/5G cellular mobile communication, and may perform query, reporting, and configuration management by using an AT (Attention) command (that is, a modem command language), for example, trigger a network search, query a network speed, and query cell signal strength, or access a cellular mobile communications network. In this embodiment of this application, the modem core may respond to query of the external charging state service, and report a type of a network accessed by the wireless access device. For example, the network type may include a 4G network or a 5G network.

The peripheral shown in FIG. 3 is connected to a peripheral driver, and the peripheral may include a screen, a key, a USB port, or the like.

In this embodiment of this application, the external charging state service may dynamically set an external charging state based on factors such as the state that is of the mobile network accessed by the wireless access device and the state of charge of a battery. The network state and the state of charge of a battery are obtained by the modem core. The charging chip may charge the another external device based on the external charging state determined by the external charging state service. The external charging state includes a current-limiting state or a normal state.

A charging parameter corresponding to the current-limiting state includes a first maximum output current. The first maximum output current is less than a second maximum output current corresponding to a fast charging mode. For example, the second maximum output current corresponding to the fast charging mode is 2 A, and the first maximum output current may be 1.5 A, 1.8 A, 1.3 A, or the like, and is less than the second maximum output current 2 A. A charging management module may dynamically configure the second maximum output current or the first maximum output current for a charging circuit (or a charging chip) based on the external charging state, so that the charging circuit performs external charging based on the second maximum output current or the first maximum output current. The charging parameter corresponding to the current-limiting state further includes a first charging voltage, and the first charging voltage is consistent with a second charging voltage corresponding to the fast charging mode.

A charging parameter corresponding to the normal state may include the second maximum output current and the second charging voltage. The second maximum output current is a maximum external output current corresponding to the fast charging mode. The second charging voltage is an external charging voltage corresponding to the fast charging mode. In this way, the first maximum output current is less than the second maximum output current, and the first charging voltage is consistent with the second charging voltage.

In other words, the charging management module may dynamically limit a maximum output current for external charging in the fast charging mode based on a factor such as the network state of the accessed communications network or the power status. This ensures to provide faster charging user experience as much as possible when the terminal user enjoys the data service.

The peripheral may include one or more of a screen, a key, a sensor, a USB port, a network interface, or the like. The screen may include a display panel. The display panel may be a liquid crystal display (LCD), an organic light-emitting diode (OLED), an active-matrix organic light-emitting diode (AMOLED), a flexible light-emitting diode (FLED), a Miniled, a MicroLed, a Micro-oLed, quantum dot light-emitting diodes (QLED), or the like.

The sensor may include a plurality of sensor components such as an electromagnetic specific absorption rate (SAR) sensor, an acceleration sensor, a temperature sensor, and a touch sensor. For example, the SAR sensor may be configured to detect signal radiation intensity, to determine whether the radiation intensity is harmful to a human body. The acceleration sensor may detect a moving speed of the wireless access device, to determine that a current service scenario is a high-speed moving scenario such as a high-speed railway or a vehicle.

The USB port is a port that conforms to a USB standard specification, and may be specifically a mini USB port, a micro USB port, a USB type-C interface, or the like. The USB port may be configured to connect to a charger to charge the wireless access device, may be configured for the wireless access device to charge another device, or may be configured for the wireless access device to connect to another device and transmit data. For example, the wireless access device may perform network access based on an another communications technology-based network signal, and is connected to a notebook computer through the USB port, so that the notebook computer can perform network access through a USB port-based wired communication signal.

It may be understood that the structure shown in this embodiment of this application does not constitute a specific limitation on the wireless access device. In some another embodiments of this application, the wireless access device may include more or fewer components than those shown in the figure, or combine some components, or split some components, or have different component arrangements. The components shown in the figure may be implemented by hardware, software, or a combination of software and hardware. When the wireless access device is another device, the wireless access device may also have different components or structures.

In this embodiment of this application, the charging management module in the app core may obtain, from the modem core by using the AT server, the type of the cellular mobile network accessed by the wireless access device. The charging management module may further obtain the power status from a battery or a power supply management module. The charging management module may dynamically limit, based on the factor such as the type of the accessed network or the power status, the maximum output current for external charging corresponding to the fast charging mode, and perform external charging by using a charging parameter corresponding to the fast charging mode after the current is limited. Therefore, this can provide the faster charging user experience as much as possible when the terminal user enjoys the data service.

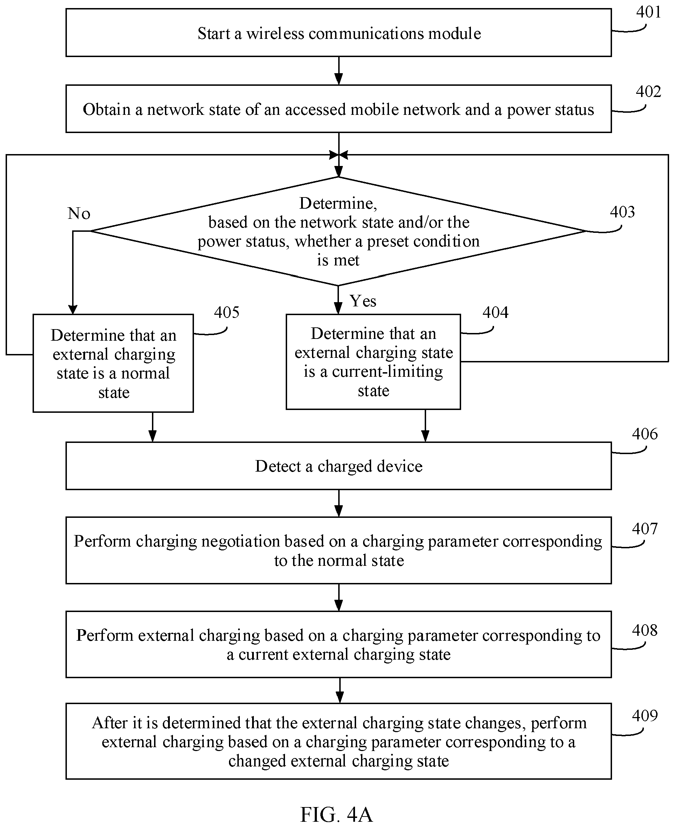

The following describes charging control methods provided in the embodiments of this application by using an example in which a wireless access device is a portable Wi-Fi hotspot having the structure shown in FIG. 3, the portable Wi-Fi hotspot includes a wireless communications module, the wireless communications module includes a mobile communications module and a Wi-Fi module, and a terminal is a mobile phone. Referring to FIG. 4A, a charging control method provided in an embodiment of this application may include the following steps.

401: A portable Wi-Fi hotspot starts a wireless communications module, where the wireless communications module includes a mobile communications module and a Wi-Fi module.

When a user wants to use the portable Wi-Fi hotspot to for network access, the user may start the mobile communications module and the Wi-Fi module of the Wi-Fi hotspot. For example, after the user presses a power-on button on the portable Wi-Fi hotspot, the portable Wi-Fi hotspot may start the mobile communications module and the Wi-Fi module. The portable Wi-Fi hotspot may perform network access by using the mobile communications module, and provide a Wi-Fi network for a mobile phone by using the Wi-Fi module. The mobile phone may access the Wi-Fi network to process a data service. For example, the data service may include accessing a network video resource, downloading music, or browsing a network picture.

402: The portable Wi-Fi hotspot obtains a network state of an accessed mobile network and a power status.

After starting the wireless communications module, the portable Wi-Fi hotspot may perform network access based on a cellular mobile network signal, and provide a Wi-Fi signal, so that the mobile phone can perform network access based on the Wi-Fi signal.

After starting the wireless communications module, the portable Wi-Fi hotspot may obtain the network state of the accessed cellular mobile communications network and the state of charge of a battery. For example, the network state may include a parameter such as a network type. The network type may include a 5G network, a 4G network, or the like. The power status may include a battery level or the like.

The portable Wi-Fi hotspot may continuously obtain the network state of the accessed mobile network and the power status, to determine an external charging state of the portable Wi-Fi hotspot in real time based on these parameters. For example, the portable Wi-Fi hotspot may periodically obtain the network state and the power status. For another example, after the network state changes, the power status changes, the battery level is greater than or equal to a preset value, or the battery level is less than a preset value, the portable Wi-Fi hotspot may obtain a network state reported by a modem core or a power status reported by the battery.

Then, the portable Wi-Fi hotspot may determine or adjust the external charging state based on the network state of the accessed communications network and/or the power status. The external charging state includes a current-limiting state or a normal state. Referring to FIG. 4A, after step 402, the method may further include the following steps.

403: The portable Wi-Fi hotspot determines, based on the network state and/or the power status, whether a preset condition is met. If the preset condition is met, the portable Wi-Fi hotspot performs step 404. If the preset condition is not met, the portable Wi-Fi hotspot performs step 405.

The portable Wi-Fi hotspot may determine, based on the network type of the accessed mobile network and/or the state of charge of the battery, whether the preset condition is met. For example, the preset condition includes: the network type of the accessed mobile network is the 5G network or the battery level is less than the preset value. For example, the preset value may be 5%, 8%, or 10%.

In the preset condition, that the network type of the mobile network accessed by the portable Wi-Fi hotspot is the 5G network may include the following case: After starting the wireless communications module, the portable Wi-Fi hotspot registers with and accesses the 5G network for the first time; or after starting the wireless communications module, the portable Wi-Fi hotspot switches from the 4G network to the 5G network.

404: The portable Wi-Fi hotspot determines that the external charging state is the current-limiting state. Then, the portable Wi-Fi hotspot performs step 403.

The external charging state includes the current-limiting state or the normal state. If the preset condition is met, the portable Wi-Fi hotspot may set the external charging state as the current-limiting state. A charging parameter corresponding to the current-limiting state includes a first charging voltage and a first maximum output current. A charging parameter corresponding to the normal state is a charging parameter corresponding to a fast charging mode. The charging parameter corresponding to the fast charging mode includes a second charging voltage and a second maximum output current. The first charging voltage is the same as the second charging voltage, and the first maximum output current is less than the second maximum output current. In other words, in the current-limiting state, the portable Wi-Fi hotspot limits a maximum output current for external charging in the fast charging mode, and reduces the maximum output current for external charging in the fast charging mode to the first maximum output current less than the second maximum output current.

An actual current when the portable Wi-Fi hotspot performs external charging is less than the maximum output current for external charging in the fast charging mode. When the maximum output current for external charging in the fast charging mode decreases, the actual output current when the portable Wi-Fi hotspot performs external charging is relatively small, and power consumption when the portable Wi-Fi hotspot performs external charging in the fast charging mode is relatively low. However, external charging power corresponding to the current-limiting state in the fast charging mode is still greater than external charging power corresponding to a standard charging mode, and charging efficiency is still relatively high.

For example, if the network type of the mobile network accessed by the portable Wi-Fi hotspot is the 5G network, the portable Wi-Fi hotspot determines that the preset condition is met. Power consumption of the portable Wi-Fi hotspot for supporting the data service is relatively high. If the portable Wi-Fi hotspot performs external charging by using the fast charging mode, a sum of power consumption of the portable Wi-Fi hotspot and fast charging power consumption may easily exceed maximum output power that can be provided by the portable Wi-Fi hotspot. As a result, charging exception protection is easily triggered. Therefore, the portable Wi-Fi hotspot may set the external charging state as the current-limiting state, to perform charging in the current-limiting state in subsequent external charging. In this way, the portable Wi-Fi hotspot can provide faster external charging user experience when the user enjoys the data service, and the portable Wi-Fi hotspot does not trigger a problem such as the charging exception protection.

If the battery level of the portable Wi-Fi hotspot is relatively low, the portable Wi-Fi hotspot determines that the preset condition is met. If the portable Wi-Fi hotspot performs external charging by using the fast charging mode, a sum of the power consumption of the portable Wi-Fi hotspot and the fast charging power consumption easily exceeds the maximum output power that can be provided by the portable Wi-Fi hotspot. As a result, the charging exception protection is easily triggered, causing a problem such as charging termination. Therefore, the portable Wi-Fi hotspot may set the external charging state as the current-limiting state, to perform charging in the current-limiting state in subsequent external charging. In this way, the portable Wi-Fi hotspot can provide the faster external charging user experience when the user enjoys the data service, and the portable Wi-Fi hotspot does not trigger the problem such as the charging exception protection.

Therefore, when the portable Wi-Fi hotspot accesses the 5G network, or when the portable Wi-Fi hotspot accesses a network other than the 5G network and the battery level is low, the portable Wi-Fi hotspot can charge another device based on the relatively low first maximum output current in the fast charging mode with high charging power. This can reduce overall power consumption of the portable Wi-Fi hotspot, and avoid the problem such as charging exception protection triggered when the power consumption is greater than the maximum output power provided by the portable Wi-Fi hotspot. Compared with charging in the standard charging mode with low charging power (corresponding to a charging parameter 5 V/2 A), current-limiting charging in the fast charging mode can increase external charging power and an external charging speed, and provide the faster charging user experience.

For example, the charging parameter corresponding to the fast charging mode may be 9 V/2 A, and the second maximum output current for external charging is 2 A. The first charging voltage corresponding to the current-limiting state is 9 V, and the first maximum output current may be a current value less than 2 A, such as 1.5 A, 1.6 A, 1.8 A, or 1.3 A.

After step 404, the portable Wi-Fi hotspot may continue to perform step 403 to determine whether the preset condition is met, so as to determine, in real time based on the preset condition, whether to set the external charging state to the current-limiting state or the normal state, and dynamically adjust the external charging state.

405: The portable Wi-Fi hotspot determines that the external charging state is the normal state. Then, the portable Wi-Fi hotspot performs step 403.

If the network type of the mobile network accessed by the portable Wi-Fi hotspot is not the 5G network and the battery level is greater than or equal to the preset value, the portable Wi-Fi hotspot determines that the preset condition is not met, and the portable Wi-Fi hotspot may set the external charging state as the normal state, that is, a non-current-limiting state. A charging parameter corresponding to the normal state is consistent with a charging parameter corresponding to a fast charging mode.

For example, if the network type of the mobile network accessed by the portable Wi-Fi hotspot is the 4G network and the battery level is greater than the preset value, the preset condition is not met, and the portable Wi-Fi hotspot may set the external charging state as the normal state. In this case, power consumption of the portable Wi-Fi hotspot for supporting the data service is relatively low, and maximum output power that can be provided by the portable Wi-Fi hotspot is relatively high. The portable Wi-Fi hotspot can perform external charging by using the fast charging mode corresponding to the high charging power. Compared with charging in a standard charging mode with low charging power, external charging in the fast charging mode corresponding to the high charging power can increase external charging power and an external charging speed, and provide the faster charging user experience.

After step 405, the portable Wi-Fi hotspot may continue to perform step 403 to determine whether the preset condition is met, so as to determine, in real time based on the preset condition, whether to set the external charging state to the current-limiting state or the normal state, and dynamically adjust the external charging state.

In other words, after starting the wireless communications module, the portable Wi-Fi hotspot may determine, based on the network type of the currently accessed mobile network and/or the power status, whether to set the external charging state as the current-limiting state or the normal state.

For example, if the portable Wi-Fi hotspot registers with and accesses the 5G network after starting the wireless communications module, the portable Wi-Fi hotspot may set the external charging state as the current-limiting state. Then, if the portable Wi-Fi hotspot switches to the 4G network and the battery level is greater than or equal to the preset value, the portable Wi-Fi hotspot may set the external charging state as the normal state. If the portable Wi-Fi hotspot accesses the 4G network and the battery level is less than the preset value, the portable Wi-Fi hotspot may set the external charging state as the current-limiting state. Then, if the portable Wi-Fi hotspot switches to the 5G network, the portable Wi-Fi hotspot may set the external charging state as the current-limiting state.

For another example, if the portable Wi-Fi hotspot registers with and accesses the 4G network after starting the wireless communications module and the battery level is greater than or equal to the preset value, the portable Wi-Fi hotspot may set the external charging state as the normal state. If the portable Wi-Fi hotspot switches to the 5G network, the portable Wi-Fi hotspot may set the external charging state as the current-limiting state.

After detecting a device to be charged the portable Wi-Fi hotspot may perform external charging by using a charging parameter corresponding to a current external charging state. Referring to FIG. 4A, the charging control method may further include the following steps.

406: The portable Wi-Fi hotspot detects the device to be charged.

The portable Wi-Fi hotspot can charge the terminal that accesses the Wi-Fi network generated by using the portable Wi-Fi hotspot, and can also charge another terminal that does not access the Wi-Fi network.

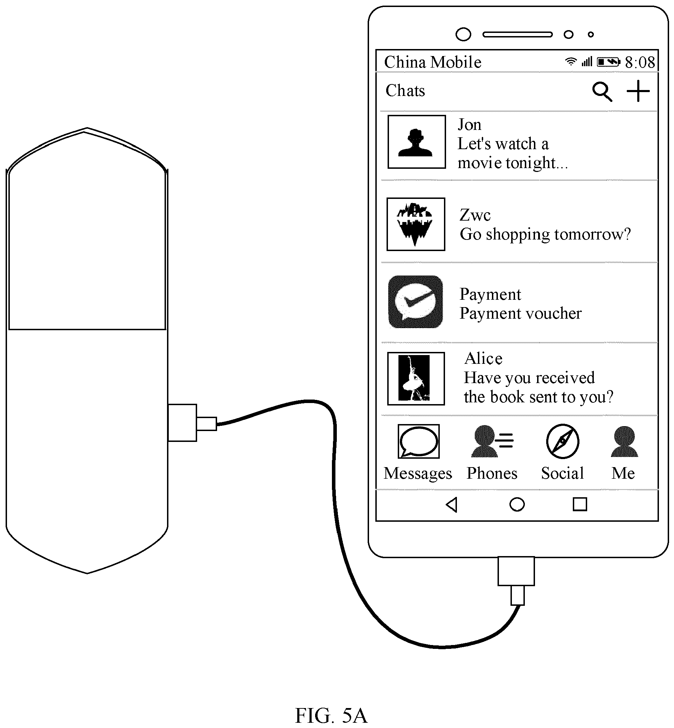

For example, when the mobile phone that accesses the Wi-Fi network generated by using the portable Wi-Fi hotspot has insufficient power, the user may use the portable Wi-Fi hotspot to charge the mobile phone. The portable Wi-Fi hotspot may charge the mobile phone in wired or wireless mode. For example, referring to FIG. 5A, a portable Wi-Fi hotspot may charge a mobile phone through a USB port and a USB data cable. After being connected to the mobile phone through the USB data cable, the portable Wi-Fi hotspot can negotiate with the mobile phone about a charging/charged role. After determining that the portable Wi-Fi hotspot is a charging device and that the mobile phone is a device to be charged, the portable Wi-Fi hotspot determines that the device to be charged is detected.

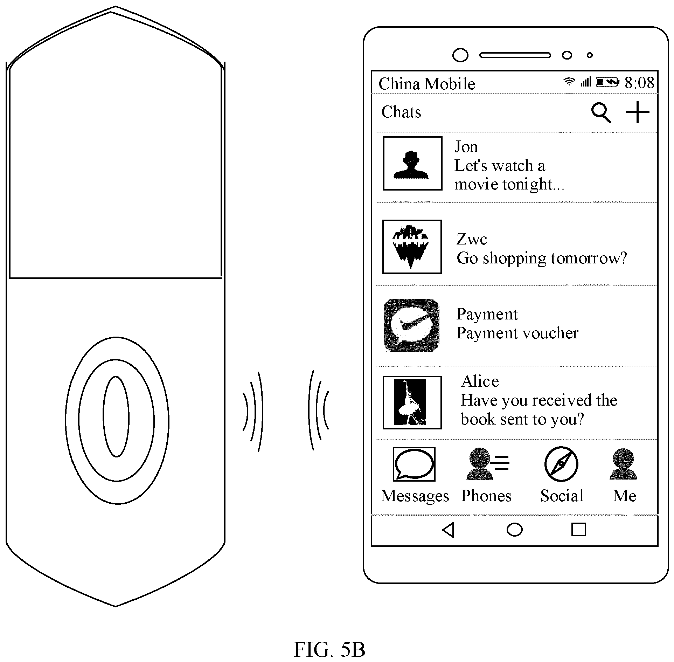

For another example, referring to FIG. 5B, a portable Wi-Fi hotspot may charge a mobile phone through a wireless coil. The portable Wi-Fi hotspot can exchange a radio frequency signal through the wireless coil to negotiate with the mobile phone within a radiation range of the wireless coil about a charging/charged role. After determining that the portable Wi-Fi hotspot is a charging device and that the mobile phone is a device to be charged, the portable Wi-Fi hotspot determines that the device to be charged is detected.

407: The portable Wi-Fi hotspot performs charging negotiation based on the charging parameter corresponding to the normal state.

The portable Wi-Fi hotspot may perform charging negotiation with the mobile phone based on a super charge protocol (SCP) charging protocol, a fast charge protocol (FCP), a quick charge (QC) protocol, a flash charge VOOC protocol, the charging parameter corresponding to the normal state, that is, the charging parameter corresponding to the fast charging mode, or the like.

In a negotiation process, the portable Wi-Fi hotspot may send, to the mobile phone, an external charging capability supported by the portable Wi-Fi hotspot. The capability is an external charging capability corresponding to the normal state, that is, an external charging capability corresponding to the fast charging mode.

For example, the portable Wi-Fi hotspot may send, to the mobile phone, a charging parameter supported by the portable Wi-Fi hotspot. The charging parameter includes the external charging voltage 9 V corresponding to the fast charging mode and the maximum output current 2 A of external charging corresponding to the fast charging mode. The mobile phone may also send, to the portable Wi-Fi hotspot, a charging receiving capability supported by the mobile phone. The mobile phone may further select a charging parameter that needs to be used, and send the charging parameter to the portable Wi-Fi hotspot.

Wireless charging is used as an example. Interaction information in the charging negotiation process may be sent through a wireless coil. Based on signal modulation, the interaction information may be carried in a wireless magnetic energy signal that is sent through the wireless coil for sending. For example, in a Qi protocol, information of a device to be charged end is transmitted to a charging device end in an amplitude shift keying (ASK) modulation mode through a wireless coil, and the charging device end sends and transmits information to the device to be charged end in a frequency shift keying (FSK) modulation mode. A specific flag bit in a communications data packet format is used to determine a type of a data packet, so as to implement a corresponding response based on the type of the data packet. For example, during charging negotiation, the portable Wi-Fi hotspot sends a plurality of optional groups of charging parameters for external charging to the mobile phone by using first wireless information. The plurality of groups of charging parameters include the charging parameter corresponding to the fast charging mode: The charging voltage is 9 V and the maximum output current is 2 A. The mobile phone replies a selected target external charging parameter to the portable Wi-Fi hotspot by using second wireless information. The target external charging parameter is the charging parameter corresponding to the fast charging mode: The charging voltage is 9 V and the maximum output current is 2 A.

408: The portable Wi-Fi hotspot charges the device to be charged based on the charging parameter corresponding to the current external charging state.

If the current external charging state is the current-limiting state, the portable Wi-Fi hotspot performs external charging by using the charging parameter corresponding to the current-limiting state in the fast charging mode. For example, the charging parameter corresponding to the fast charging mode is 9 V/2 A, and the charging parameter corresponding to the current-limiting state in the fast charging mode is 9 V/1.5 A, that is, the first charging voltage is 9 V, and the first maximum output current is 1.5 A. In this case, the portable Wi-Fi hotspot charges the mobile phone based on the first charging voltage 9 V and the first maximum output current 1.5 A.

In a process of performing external charging in the current-limiting state, the charging voltage output by the portable Wi-Fi hotspot is 9 V A magnitude of a charging current output by the portable Wi-Fi hotspot may be adjusted based on a requirement of the mobile phone, but the charging current output by the portable Wi-Fi hotspot is less than the first maximum output current 1.5 A. For example, the magnitude of the charging current output by the portable Wi-Fi hotspot may be in a curved descending trend.

In this way, the portable Wi-Fi hotspot may charge the another device based on a relatively small first maximum output current in the fast charging mode with high charging power. This can reduce the overall power consumption of the portable Wi-Fi hotspot, and avoids the problem such as the charging exception protection triggered because power consumption is greater than the maximum output power. Compared with charging in a standard charging mode with low charging power, current-limiting charging in the fast charging mode can increase the external charging power and the external charging speed, and provide the faster charging user experience.

If the current external charging state is the normal state, the portable Wi-Fi hotspot performs external charging by using the charging parameter corresponding to the fast charging mode. For example, the charging parameter corresponding to the fast charging mode is 9 V/2 A, and the portable Wi-Fi hotspot charges the mobile phone based on the charging voltage 9 V and the second maximum output current 2 A. Compared with charging in a standard charging mode with low charging power, external charging by using the charging parameter corresponding to the fast charging mode can increase the external charging power and an external charging speed, and provide the faster charging user experience.

In a process of performing external charging in the normal state, the charging voltage output by the portable Wi-Fi hotspot is 9 V A magnitude of a charging current output by the portable Wi-Fi hotspot may be adjusted based on a requirement of the mobile phone, but the charging current output by the portable Wi-Fi hotspot is less than the second maximum output current 2A.

409: After determining, based on the network state and/or the power status, that the external charging state changes, the portable Wi-Fi hotspot performs external charging based on a charging parameter corresponding to a changed external charging state.

In a process of performing external charging, the network state of the mobile network accessed by the portable Wi-Fi hotspot may change, and the power status may also change. It can be learned from the foregoing description that the portable Wi-Fi hotspot may switch the external charging state in real time based on the network state and/or the power status. In the process of performing external charging, if the external charging state changes, the portable Wi-Fi hotspot may correspondingly perform external charging by using the changed external charging state.

For example, the portable Wi-Fi hotspot accesses the 5G network after starting the wireless communications module, and the external charging status is the current-limiting state. After detecting the device to be charged, the portable Wi-Fi hotspot performs external charging based on the current-limiting state. Then, the portable Wi-Fi hotspot switches the external charging state to the normal state based on the network state and/or the power status. The portable Wi-Fi hotspot performs external charging based on the normal state after the switching.

In the solution described in steps 401 to 409, when the portable Wi-Fi hotspot starts the wireless communications module, the portable Wi-Fi hotspot may determine, in real time based on the network state of the accessed mobile network and/or the state of charge of a battery, that the external charging state is the current-limiting state or the normal state, and perform external charging by using the determined external charging state in the fast charging mode. Therefore, the portable Wi-Fi hotspot can provide the faster charging efficiency for the user terminal while starting the wireless communications module to provide a network access capability for the user terminal. This improves user use experience.

In addition, when the state of the network accessed by the portable Wi-Fi hotspot is switched or the battery level is changed, although the portable Wi-Fi hotspot may perform external charging by using different external charging states, the portable Wi-Fi hotspot may perform external negotiation charging by using the same fast charging mode. Therefore, the charging mode is not frequently switched, and this does not frequently interrupt charging and then re-initiate charging, reduce interference to the user, and improve the user use experience.

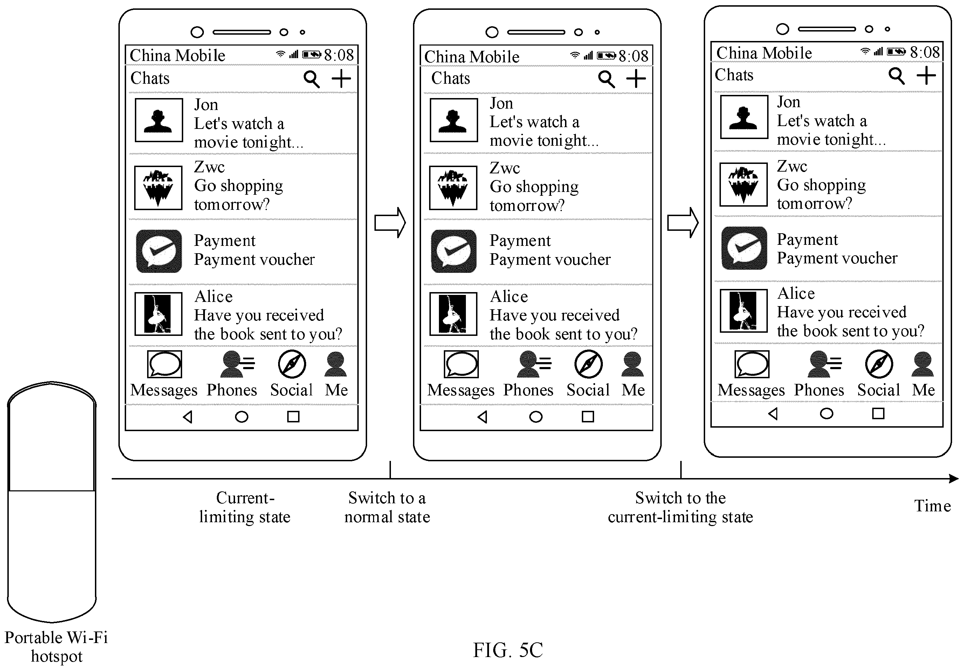

For example, referring to FIG. 5C, when switching between different external charging states, a portable Wi-Fi hotspot does not switch a charging mode. A mobile phone does not light up a screen or prompt a user in another manner. Therefore, user experience is relatively good.

It should be noted that, because the portable Wi-Fi hotspot determines the external charging state in real time based on the network state and/or the power status, and a series of operations from a bottom-layer modem processor to an upper-layer service layer are related, the determining process takes some time. In the solution described in steps 401 to 409, after starting the wireless communications module, the portable Wi-Fi hotspot may first adjust the external charging state in real time based on the network state and/or the power status before detecting the device to be charged. Therefore, after detecting the device to be charged, the portable Wi-Fi hotspot may immediately perform external charging based on the currently determined external charging state. The portable Wi-Fi hotspot does not need to determine the external charging state based on the network state and/or the power status and then perform external charging based on the currently determined external charging state. Therefore, external charging can be quickly started.

In some other embodiments, after starting the wireless communications module, the portable Wi-Fi hotspot may immediately set the external charging state as the current-limiting state. This avoids charging exception caused because the power consumption of the portable Wi-Fi hotspot is greater than provided maximum output power when the portable Wi-Fi hotspot immediately performs external charging after starting the wireless communications module, and the portable Wi-Fi hotspot accesses the 5G network or the battery level of the portable Wi-Fi hotspot is less than the preset value.

For example, after starting the wireless communications module, the portable Wi-Fi hotspot may immediately set the external charging state as the current-limiting state. It takes some time for the portable Wi-Fi hotspot to determine the external charging state based on the network state and/or the power status. If the portable Wi-Fi hotspot has not determined the external charging state based on the network state and/or the power status after detecting the device to be charged and starting the wireless communications module, and the accessed network is the 5G network or the battery level of the portable Wi-Fi hotspot is less than the preset value, the portable Wi-Fi hotspot may first perform charging negotiation based on the normal state, and perform external charging based on the charging parameter corresponding to the current-limiting state. This avoids charging exception caused because power consumption of the portable Wi-Fi hotspot is greater than the provided maximum output power when the accessed network is the 5G network or the battery level is less than the preset value. Subsequently, the portable Wi-Fi hotspot may determine the external charging state in real time based on the network state and/or the power status. If the external charging state changes to the normal state, the portable Wi-Fi hotspot may switch to charge the mobile phone by using the charging parameter corresponding to the normal state, and does not need to perform charging negotiation again in this charging process.

In another example, when disabling the wireless communications module, the portable Wi-Fi hotspot charges the mobile phone by using the charging parameter corresponding to the normal state. Then, the portable Wi-Fi hotspot starts the wireless communications module, and the portable Wi-Fi hotspot continues to charge the mobile phone. Because it takes some time for the portable Wi-Fi hotspot to determine the external charging state based on the network state and/or the power status, after the portable Wi-Fi hotspot just starts the wireless communications module, if the portable Wi-Fi hotspot accesses the 5G network or the battery level is less than the preset value, the power consumption of the portable Wi-Fi hotspot may be greater than the provided maximum output power. In a time period between time in which the portable Wi-Fi hotspot switches to start the wireless communications module and time in which the portable Wi-Fi hotspot determines, based on the network state and/or the power status, that the external charging state is the current-limiting state, the power consumption of the portable Wi-Fi hotspot may be greater than the provided maximum output power. As a result, the charging exception is caused.

In this embodiment of this application, after starting the wireless communications module, the portable Wi-Fi hotspot may immediately set the external charging state as the current-limiting state. In other words, after starting the wireless communications module, the portable Wi-Fi hotspot may preset the external charging state as the current-limiting state. In this way, in the time period between the time in which the portable Wi-Fi hotspot starts the wireless communications module and the time in which the portable Wi-Fi hotspot determines, based on the network state and/or the power status, that the external charging state is the current-limiting state, the portable Wi-Fi hotspot may also charge the mobile phone based on the charging parameter corresponding to the current-limiting state. In some embodiments, the portable Wi-Fi hotspot may not perform charging negotiation in the external charging process. Subsequently, the portable Wi-Fi hotspot may determine the external charging state in real time based on the network state and/or the power status. If the external charging state changes to the normal state, the portable Wi-Fi hotspot may switch to charge the mobile phone by using the charging parameter corresponding to the normal state, and does not need to perform charging negotiation again in this charging process.

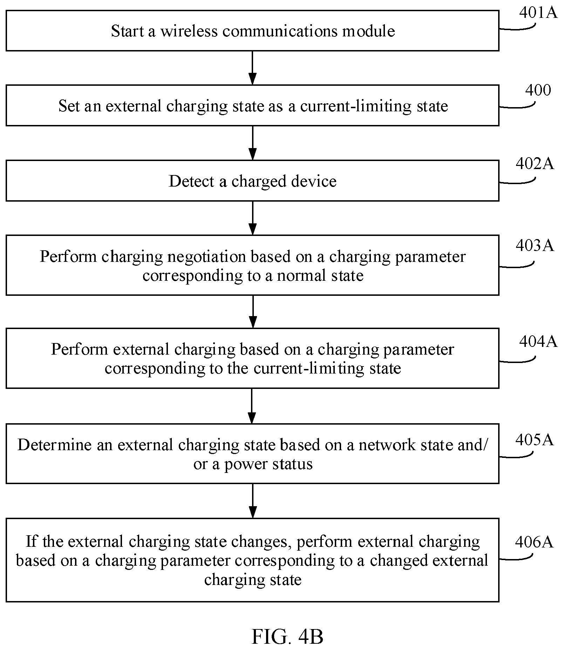

For example, for a method procedure corresponding to this solution, refer to FIG. 4B. As shown in FIG. 4B, the procedure may include the following steps.

401A: A portable Wi-Fi hotspot starts a wireless communications module, and the wireless communications module includes a mobile communications module and a Wi-Fi module.

400: The portable Wi-Fi hotspot sets an external charging state as a current-limiting state.

It should be noted that step 400 may be performed between step 401A and step 402A, or may be performed between step 402A and step 403A. This is not limited in this embodiment of this application.

402A: The portable Wi-Fi hotspot detects a device to be charged.

403A: The portable Wi-Fi hotspot performs charging negotiation based on a charging parameter corresponding to a normal state.

404A: The portable Wi-Fi hotspot charges the device to be charged based on a charging parameter corresponding to the current-limiting state.

405A: The portable Wi-Fi hotspot may determine an external charging state based on a network state and/or a power status.

The portable Wi-Fi hotspot may determine, based on the preset condition, whether the current external charging state is the current-limiting state or the normal state.

406A: If the external charging state changes, the portable Wi-Fi hotspot charges the device to be charged based on a charging parameter corresponding to a changed external charging state.

If the portable Wi-Fi hotspot determines, based on the preset condition, that the current external charging state is the normal state, the external charging state changes. Therefore, step 406A of performing external charging based on the charging parameter corresponding to the changed normal state may be performed.

If the portable Wi-Fi hotspot determines, based on the preset condition, that the current external charging state is still the current-limiting state, the portable Wi-Fi hotspot determines that the external charging state does not change, and therefore continues to perform external charging based on the charging parameter corresponding to the current-limiting state.

Then, in the external charging process, the portable Wi-Fi hotspot may cyclically perform step 405A and step 406A, to charge a mobile phone based on the external charging state that changes in real time.

In some embodiments, after the current external charging ends, the portable Wi-Fi hotspot may cyclically perform step 405A and step 406A, to perform external charging in a next external charging process based on the external charging state that changes in real time.

In some other embodiments, after the current external charging ends, the portable Wi-Fi hotspot may further restore the external charging state as the current-limiting state. This avoids charging exception caused because power consumption of the portable Wi-Fi hotspot is greater than provided maximum output power when an accessed network is a 5G network or a battery level is less than a preset value in next external charging.

It should be noted that, after step 400 shown in FIG. 4B, if the portable Wi-Fi hotspot first determines the external charging state based on the network state and/or the power status, and then detects the device to be charged, the portable Wi-Fi hotspot may perform step 406 to step 409 shown in FIG. 4A after determining the external charging state.

In the solution described in FIG. 4B, after starting the wireless communications module, the portable Wi-Fi hotspot may first set the external charging state as the current-limiting state. This avoids the charging exception caused because the power consumption of the portable Wi-Fi hotspot is greater than the provided maximum output power when the accessed network is the 5G network or the battery level is less than the preset value. Then, the portable Wi-Fi hotspot determines in real time, based on a type of the accessed network and/or the power status, that the external charging state is the normal state or the current-limiting state, and charges the charged device based on a charging parameter corresponding to the external charging state determined in real time.

When the portable Wi-Fi hotspot performs external charging, if the external charging state is frequently switched between the current-limiting state and the normal state, an external charging current frequently increases or decreases. This may cause a problem such as an unstable charging state. To improve charging stability, in some embodiments, after the portable Wi-Fi hotspot switches the external charging state, if the portable Wi-Fi hotspot determines, within preset duration (for example, 30s or 1 min), to switch an external charging state again based on the network state and/or the power status, the portable Wi-Fi hotspot does not switch the charging state temporarily. The portable Wi-Fi hotspot determines, after the preset duration, based on the network state and/or the power status, whether to switch the external charging state.

In some other embodiments, the portable Wi-Fi hotspot periodically (for example, the period is 30s or 1 min) determines the external charging state based on the network state and/or the power status, to avoid frequent switching between the current-limiting state and the normal state.

In some other embodiments, the portable Wi-Fi hotspot determines the external charging state in real time before detecting the device to be charged. After detecting the device to be charged, the portable Wi-Fi hotspot periodically determines the external charging state, to avoid frequent switching between different external charging states.

In some other embodiments, there may be a plurality of first maximum output currents, and the current-limiting state may include a plurality of modes. The portable Wi-Fi hotspot may dynamically select one first maximum output current based on the network state and/or the power status, to dynamically adjust a current-limiting degree.

For example, the portable Wi-Fi hotspot may adjust the current-limiting degree and a current-limiting mode based on a battery level. For example, if the battery level is less than a preset value 1 and greater than or equal to a preset value 2, a first maximum output current is 1.8 A, the current-limiting degree is relatively small, and the first maximum output current is relatively large. If the battery level is less than a preset value 2, a first maximum output current is 1.5 A, the current-limiting degree is relatively large, and the first maximum output current is relatively small. For example, the preset value 1 is 8%, and the preset value 2 is 5%.

Because a lower battery level indicates lower maximum output power that can be provided by the portable Wi-Fi hotspot, the portable Wi-Fi hotspot may select a matched first maximum output current based on an actual battery level. This avoids the charging exception caused because the power consumption of the portable Wi-Fi hotspot exceeds maximum output power that can be provided in the current power status.

In some other embodiments, the portable Wi-Fi hotspot may further adjust the current-limiting degree in real time based on a service or power consumption. For example, the portable Wi-Fi hotspot may determine, based on the current service, power consumption required for supporting the service, and determine, based on a difference between provided maximum output power and the power consumption required for supporting the service, power consumption that can be used for external charging, to set the first maximum output current corresponding to the current-limiting state. For example, when a video resource is accessed, the power consumption required for supporting the service is relatively high, and the first maximum output current may be relatively small. When an ebook resource is accessed, the power consumption required for supporting the service is relatively low, and the first maximum output current may be relatively large.

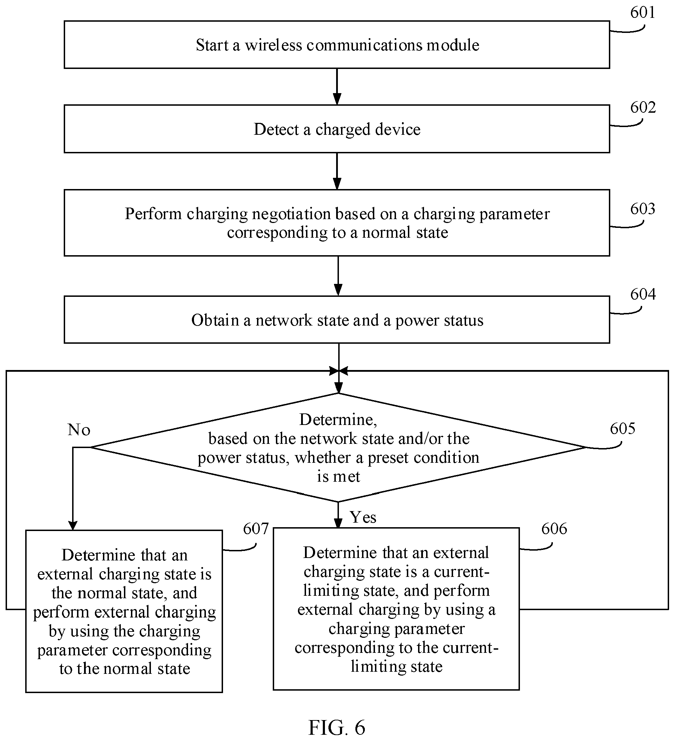

The foregoing is described by using an example in which the portable Wi-Fi hotspot first sets the external charging state, and then performs external charging based on the current external charging state after detecting the charged device. In some other embodiments, after detecting the device to be charged, the portable Wi-Fi hotspot sets the external charging state, and performs external charging based on the external charging state. The portable Wi-Fi hotspot does not need to pre-determine the external charging state before detecting the device to be charged. Therefore, a resource of the portable Wi-Fi hotspot can be saved. Referring to FIG. 6, the method may include the following steps.

601: A portable Wi-Fi hotspot starts a wireless communications module.

602: The portable Wi-Fi hotspot detects a device to be charged.

603: The portable Wi-Fi hotspot performs charging negotiation based on a charging parameter corresponding to a normal state.

604: The portable Wi-Fi hotspot obtains a network state of an accessed communications network and a power status.

605: The portable Wi-Fi hotspot determines, based on the network state and/or the power status, whether a preset condition is met. If the preset condition is met, the portable Wi-Fi hotspot performs step 606. If the preset condition is not met, the portable Wi-Fi hotspot performs step 607.

For example, the preset condition includes: a network type of the accessed mobile network is a 5G network or a battery level is less than a preset value. For another example, the preset condition includes: a network type of the accessed mobile network is a 5G network or a battery level is less than a preset value.

606: The portable Wi-Fi hotspot determines that the external charging state is a current-limiting state, and performs external charging by using a charging parameter corresponding to the current-limiting state. Then, the portable Wi-Fi hotspot performs step 605.

607: The portable Wi-Fi hotspot determines that the external charging state is the normal state, and charges the device to be charged by using the charging parameter corresponding to the normal state. Then, the portable Wi-Fi hotspot performs step 605.

The charging parameter corresponding to the normal state is the same as a charging parameter corresponding to a fast charging mode.

In the solution described in steps 601 to 607, after detecting the device to be charged, the portable Wi-Fi hotspot may determine, in real time based on the network type of the accessed mobile network and/or the state of charge of a battery, that the external charging state is the current-limiting state or the normal state, and perform external charging by using the determined external charging state in the fast charging mode. Therefore, the portable Wi-Fi hotspot can provide faster charging efficiency for a terminal used by a user while starting the wireless communications module to provide a network access capability for the terminal used by the user. This improves user use experience.

Compared with a case in which the portable Wi-Fi hotspot first detects the device to be charged and then sets the external charging state, in a case in which the portable Wi-Fi hotspot first sets the external charging state, detects the device to be charged, and then performs external charging based on the current external charging state, the portable Wi-Fi hotspot may set the external charging state in advance based on the network state and/or the power status, so that the portable Wi-Fi hotspot starts external charging more quickly after detecting the device to be charged.

The foregoing is mainly described by using the mainstream fast charging mode corresponding to 9 V/2 A as an example. The mainstream fast charging mode may alternatively be another fast charging mode, for example, a fast charging mode corresponding to a charging parameter 5 V/4.5 A or another fast charging mode. This is not limited in this embodiment of this application. When another fast charging mode such as the fast charging mode corresponding to 5 V/4.5 A is used, current-limiting processing can also be performed. For example, in a current-limiting state corresponding to a fast charging mode 5 V/4.5 A, a first charging voltage for external charging is 5 V, and a first maximum output current may be 3 A, 4 A, 2.5 A, or the like.

In addition, when the portable Wi-Fi hotspot disables the wireless communications module, the portable Wi-Fi hotspot may perform external charging by using the charging parameter corresponding to the fast charging mode. This can improve external charging efficiency as much as possible, and improve the fast-charging user experience.

For example, in the state in which the wireless communications module is disabled, the portable Wi-Fi hotspot performs external charging by using the charging parameter corresponding to the fast charging mode in the normal state. Then, if the portable Wi-Fi hotspot starts the wireless communications module in a charging process, the portable Wi-Fi hotspot sets the external charging state by using the method provided in the foregoing embodiment, and performs charging control based on the external charging state. Subsequently, if the portable Wi-Fi hotspot disables the wireless communications module in the charging process, the portable Wi-Fi hotspot performs external charging based on the charging parameter corresponding to the fast charging mode.

It may be understood that, to implement the foregoing functions, the wireless access device includes a corresponding hardware and/or software module for performing the functions. With reference to algorithm steps of each example described in the embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to the embodiments, but it should not be considered that the implementation goes beyond the scope of this application.

In this embodiment, function modules of the wireless access device may be obtained through division according to the foregoing method examples. For example, the function modules may be obtained through division corresponding to various functions, or two or more functions may be integrated into one processing module. The integrated module may be implemented in a form of hardware. It should be noted that, in this embodiment, division into modules is an example, and is merely logical function division. In actual implementation, another division manner may be used.

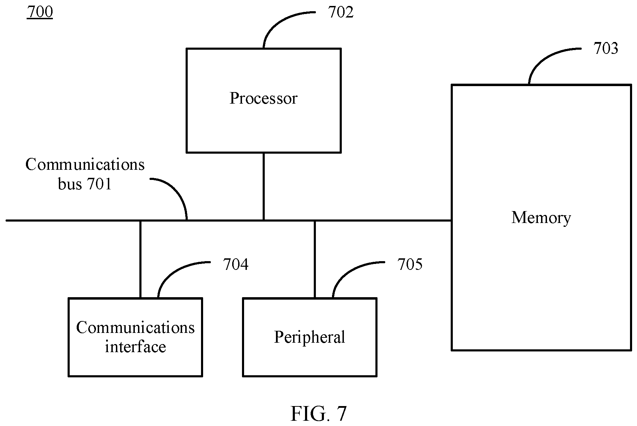

For example, referring to FIG. 7, an embodiment of this application provides a wireless access device 700, including a communications bus 701, and a processor 702, a memory 703, a communications interface 704, and peripheral 705 that are connected through the bus 701. The communications interface 704 may be configured to communicate with another device. The memory 703 stores code. When the code is executed by the processor 702, the wireless access device 700 is started to perform the foregoing related method steps to implement the charging control method in the foregoing embodiments.

An embodiment of this application further provides a wireless access device, including one or more processors, a wireless communications module, and one or more memories. The one or more memories are coupled to the one or more processors. The one or more memories are configured to store computer program code, and the computer program code includes computer instructions. When the one or more processors execute the computer instructions, the wireless access device is started to perform the charging control method in the foregoing method embodiments.

An embodiment of this application further provides a wireless access device, including one or more processors, and one or more memories. The one or more memories are coupled to the one or more processors. The one or more memories are configured to store computer program code, and the computer program code includes computer instructions. When the one or more processors execute the computer instructions, the wireless access device is started to perform the charging control method in the foregoing method embodiments.

An embodiment of this application further provides a computer-readable storage medium. The computer-readable storage medium stores computer instructions, and when the computer instructions are run on a wireless access device, the wireless access device is started to perform the foregoing related method steps to implement the charging control method in the foregoing embodiments.

An embodiment of this application further provides a computer program product. When the computer program product runs on a computer, the computer is enabled to perform the foregoing related steps, to implement the charging control method performed by the wireless access device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the charging control method performed by the wireless access device in the foregoing method embodiments.

The wireless access device, the computer-readable storage medium, the computer program product, or the chip provided in the embodiments is configured to perform the corresponding method provided above. Therefore, for beneficial effects that can be achieved, refer to the beneficial effects in the corresponding method provided above. Details are not described herein again.

Another embodiment of this application provides a communications system. The communications system may include the foregoing wireless access device and the foregoing terminal. The wireless access device and the terminal in the communications system may be configured to implement the foregoing charging control method.

The foregoing descriptions about implementations allow a person skilled in the art to understand that, for the purpose of convenient and brief description, division into the foregoing function modules is taken as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor to perform all or some of the steps of the methods described in the embodiments of this application. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementations of this application that are not necessarily claimed, but are not intended to limit the protection scope of this application. Therefore, the protection scope of this application shall be subject to the protection scope of the claims.

## Claims

1. A charging control method, comprising:
starting, by a wireless access device (101), a wireless communications module (401);
determining, by the wireless access device (101), an external charging state (403) based on a network state of an accessed communications network and/or a power status of the wireless access device (402), wherein the external charging state comprises a current-limiting state or a normal state, a charging parameter corresponding to the current-limiting state comprises a first charging voltage and a first maximum output current, a charging parameter corresponding to the normal state comprises a second charging voltage and a second maximum output current, the first charging voltage is the same as the second charging voltage, and the first maximum output current is less than the second maximum output current;
detecting (406), by the wireless access device (101), a device to be charged (102);
performing, by the wireless access device (101), charging negotiation based on the charging parameter corresponding to the normal state (405) with the device to be charged (102); and
charging, by the wireless access device (101), the device to be charged (102) based on a charging parameter corresponding to the external charging state (408).

2. The method according to claim 1, wherein the determining, by the wireless access device (101), an external charging state based on a network state of an accessed communications network and/or a power status comprises:
if the wireless access device (101) determines that a preset condition is met, determining, by the wireless access device (101), that the external charging state is the current-limiting state, wherein the preset condition comprises: a network type of the accessed communications network is a 5G network or a battery level of the wireless access device (101) is less than a preset value; or
if the wireless access device (101) determines that the preset condition is not met, determining, by the wireless access device (101), that the external charging state is the normal state.

3. The method according to claim 1 or 2, wherein the second charging voltage corresponding to the normal state is 9 V, and the second maximum output current is 2 A; or
the second charging voltage corresponding to the normal state is 5 V, and the second maximum output current is 4.5 A.

4. The method according to claim 3, wherein when the second charging voltage corresponding to the normal state is 9 V and the second maximum output current is 2 A, the first maximum output current is 1.5 A.

5. The method according to any one of claims 1 to 4, wherein the method further comprises:
after disabling the wireless communications module, performing, by the wireless access device (101), external charging by using the charging parameter corresponding to the normal state.

6. The method according to any one of claims 1 to 5, wherein the wireless communications module comprises a mobile communications module and a Wi-Fi module.

7. The charging control method of claim 1, wherein the method further comprises starting, by the wireless access device (101), a wireless communications module;
setting, by the wireless access device (101), the external charging state as the current-limiting state (404);
charging, by the wireless access device (101), the device to be charged (102) based on the charging parameter corresponding to the current-limiting state; and
if the wireless access device (101) determines, based on a network state of an accessed communications network and/or a power status of the wireless access device (101), that the external charging state changes, charging, by the wireless access device (101), the device to be charged (102) based on a charging parameter corresponding to a changed external charging state (409).

8. A wireless access device (101), comprising one or more processors, a wireless communications module, and a memory, wherein the memory stores code; and
when the code is executed by the wireless access device (101), the wireless access device (101) is started to perform the following steps:
starting the wireless communications module (401);
determining an external charging state based on a network state of an accessed communications network and/or a power status of the wireless access device (402), wherein the external charging state comprises a current-limiting state or a normal state, a charging parameter corresponding to the current-limiting state comprises a first charging voltage and a first maximum output current, a charging parameter corresponding to the normal state comprises a second charging voltage and a second maximum output current, the first charging voltage is the same as the second charging voltage, and the first maximum output current is less than the second maximum output current;
detecting a device to be charged (102);
performing charging negotiation (407) based on the charging parameter corresponding to the normal state with the device to be charged; and
charging the device to be charged (102) based on a charging parameter corresponding to the external charging state.

9. The wireless access device (101) according to claim 8, wherein the step of determining the external charging state based on the network state of the accessed communications network and/or the power status comprises:
if it is determined that a preset condition is met, the wireless access device (101) determines that the external charging state is the current-limiting state, wherein the preset condition comprises: a network type of the accessed communications network is a 5G network or a battery level of the wireless access device (101) is less than a preset value; or
if it is determined that the preset condition is not met, the wireless access device (101) determines that the external charging state is the normal state.

10. The wireless access device (101) according to claim 8 or 9, wherein the second charging voltage corresponding to the normal state is 9 V, and the second maximum output current is 2 A; or
the second charging voltage corresponding to the normal state is 5 V, and the second maximum output current is 4.5 A.

11. The wireless access device (101) according to claim 10, wherein when the second charging voltage corresponding to the normal state is 9 V and the second maximum output current is 2 A, the first maximum output current is 1.5 A.

12. The wireless access device (101) according to any one of claims 8 to 11, wherein when the code is executed by the wireless access device (101), the wireless access device (101) is started to perform the following step:
after disabling the wireless communications module, performing external charging by using the charging parameter corresponding to the normal state.

13. The wireless access device (101) according to any one of claims 8 to 12, wherein the wireless communications module comprises a mobile communications module and a Wi-Fi module.

## Patentansprüche

1. Ladesteuerungsverfahren, das Folgendes umfasst:
Starten, durch eine Drahtloszugangsvorrichtung (101), eines Drahtloskommunikationsmoduls (401);
Bestimmen, durch die Drahtloszugangsvorrichtung (101), eines externen Ladezustands (403) basierend auf einem Netzzustand eines Kommunikationsnetzes, auf das zugegriffen wird, und/oder einem Leistungsstatus der Drahtloszugangsvorrichtung (402), wobei der externe Ladezustand einen Strombegrenzungszustand oder einen Normalzustand umfasst, ein Ladeparameter, der dem Strombegrenzungszustand entspricht, eine erste Ladespannung und einen ersten maximalen Ausgangsstrom umfasst, ein Ladeparameter, der dem Normalzustand entspricht, eine zweite Ladespannung und einen zweiten maximalen Ausgangsstrom umfasst, die erste Ladespannung gleich der zweiten Ladespannung ist und der erste maximale Ausgangsstrom kleiner als der zweite maximale Ausgangsstrom ist;
Detektieren (406), durch die Drahtloszugangsvorrichtung (101), einer zu ladenden Vorrichtung (102);
Durchführen, durch die Drahtloszugangsvorrichtung (101), einer Ladeverhandlung basierend auf dem dem Normalzustand (405) entsprechenden Ladeparameter mit der zu ladenden Vorrichtung (102); und
Laden, durch die Drahtloszugangsvorrichtung (101), der zu ladenden Vorrichtung (102) basierend auf einem Ladeparameter, der dem externen Ladezustand (408) entspricht.

2. Verfahren nach Anspruch 1, wobei das Bestimmen, durch die Drahtloszugangsvorrichtung (101), eines externen Ladezustands basierend auf einem Netzzustand eines Kommunikationsnetzes, auf das zugegriffen wird, und/oder einem Leistungsstatus Folgendes umfasst:
wenn die Drahtloszugangsvorrichtung (101) bestimmt, dass eine voreingestellte Bedingung erfüllt ist, Bestimmen, durch die Drahtloszugangsvorrichtung (101), dass der externe Ladezustand der Strombegrenzungszustand ist, wobei die voreingestellte Bedingung Folgendes umfasst: ein Netztyp des Kommunikationsnetzes, auf das zugegriffen wird, ist ein 5G-Netz oder ein Batteriestand der Drahtloszugangsvorrichtung (101) ist geringer als ein voreingestellter Wert; oder
wenn die Drahtloszugangsvorrichtung (101) bestimmt, dass die voreingestellte Bedingung nicht erfüllt ist, Bestimmen, durch die Drahtloszugangsvorrichtung (101), dass der externe Ladezustand der Normalzustand ist.

3. Verfahren nach Anspruch 1 oder 2, wobei die zweite Ladespannung, die dem Normalzustand entspricht, 9 V beträgt und der zweite maximale Ausgangsstrom 2 A beträgt, oder
die zweite Ladespannung, die dem Normalzustand entspricht, 5 V beträgt und der zweite maximale Ausgangsstrom 4,5 A beträgt.

4. Verfahren nach Anspruch 3, wobei, wenn die zweite Ladespannung, die dem Normalzustand entspricht, 9 V beträgt und der zweite maximale Ausgangsstrom 2 A beträgt, der erste maximale Ausgangsstrom 1,5 A beträgt.

5. Verfahren nach einem der Ansprüche 1 bis 4, wobei das Verfahren ferner Folgendes umfasst:
nach Deaktivieren des Drahtloskommunikationsmoduls, Durchführen, durch die Drahtloszugangsvorrichtung (101), von externem Laden unter Verwendung des Ladeparameters, der dem Normalzustand entspricht.

6. Verfahren nach einem der Ansprüche 1 bis 5, wobei das Drahtloskommunikationsmodul ein Mobilkommunikationsmodul und ein Wi-Fi-Modul umfasst.

7. Ladesteuerungsverfahren nach Anspruch 1, wobei das Verfahren ferner Folgendes umfasst: Starten, durch die Drahtloszugangsvorrichtung (101), eines Drahtloskommunikationsmoduls;
Einstellen, durch die Drahtloszugangsvorrichtung (101), des externen Ladezustands als den Strombegrenzungszustand (404);
Laden, durch die Drahtloszugangsvorrichtung (101), der zu ladenden Vorrichtung (102) basierend auf dem Ladeparameter, der dem Strombegrenzungszustand entspricht; und
wenn die Drahtloszugangsvorrichtung (101) basierend auf einem Netzzustand eines Kommunikationsnetzes, auf das zugegriffen wird, und/oder einem Leistungsstatus der Drahtloszugangsvorrichtung (101) bestimmt, dass sich der externe Ladezustand ändert, Laden, durch die Drahtloszugangsvorrichtung (101), der zu ladenden Vorrichtung (102) basierend auf einem Ladeparameter, der dem geänderten externen Ladezustand (409) entspricht.

8. Drahtloszugangsvorrichtung (101), umfassend einen oder mehrere Prozessoren, ein Drahtlosekommunikationsmodul und einen Speicher, wobei der Speicher Code speichert; und
wenn der Code durch die Drahtloszugangsvorrichtung (101) ausgeführt wird, die Drahtloszugangsvorrichtung (101) gestartet wird, um die folgenden Schritte durchzuführen:
Starten des Drahtloskommunikationsmoduls (401);
Bestimmen eines externen Ladezustands basierend auf einem Netzzustand eines Kommunikationsnetzes, auf das zugegriffen wird, und/oder einem Leistungsstatus der Drahtloszugangsvorrichtung (402), wobei der externe Ladezustand einen Strombegrenzungszustand oder einen Normalzustand umfasst, ein Ladeparameter, der dem Strombegrenzungszustand entspricht, eine erste Ladespannung und einen ersten maximalen Ausgangsstrom umfasst, ein Ladeparameter, der dem Normalzustand entspricht, eine zweite Ladespannung und einen zweiten maximalen Ausgangsstrom umfasst, die erste Ladespannung gleich der zweiten Ladespannung ist und der erste maximale Ausgangsstrom kleiner als der zweite maximale Ausgangsstrom ist;
Detektieren einer zu ladenden Vorrichtung (102);
Durchführen einer Ladeverhandlung (407) basierend auf dem dem Normalzustand entsprechenden Ladeparameter mit der zu ladenden Vorrichtung; und
Laden der zu ladenden Vorrichtung (102) basierend auf einem Ladeparameter, der dem externen Ladezustand entspricht.

9. Drahtloszugangsvorrichtung (101) nach Anspruch 8, wobei der Schritt des Bestimmens des externen Ladezustands basierend auf dem Netzzustand des Kommunikationsnetzes, auf das zugegriffen wird, und/oder dem Leistungsstatus Folgendes umfasst:
wenn bestimmt wird, dass eine voreingestellte Bedingung erfüllt ist, bestimmt die Drahtloszugangsvorrichtung (101), dass der externe Ladezustand der Strombegrenzungszustand ist, wobei die voreingestellte Bedingung Folgendes umfasst: ein Netztyp des Kommunikationsnetzes, auf das zugegriffen wird, ist ein 5G-Netz oder ein Batteriestand der Drahtloszugangsvorrichtung (101) ist geringer als ein voreingestellter Wert; oder
wenn bestimmt wird, dass die voreingestellte Bedingung nicht erfüllt ist, bestimmt die Drahtloszugangsvorrichtung (101), dass der externe Ladezustand der Normalzustand ist.

10. Drahtloszugangsvorrichtung (101) nach Anspruch 8 oder 9, wobei die zweite Ladespannung, die dem Normalzustand entspricht, 9 V beträgt und der zweite maximale Ausgangsstrom 2 A beträgt, oder
die zweite Ladespannung, die dem Normalzustand entspricht, 5 V beträgt und der zweite maximale Ausgangsstrom 4,5 A beträgt.

11. Drahtloszugangsvorrichtung (101) nach Anspruch 10, wobei, wenn die zweite Ladespannung, die dem Normalzustand entspricht, 9 V beträgt und der zweite maximale Ausgangsstrom 2 A beträgt, der erste maximale Ausgangsstrom 1,5 A beträgt.

12. Drahtloszugangsvorrichtung (101) nach einem der Ansprüche 8 bis 11, wobei, wenn der Code durch die Drahtloszugangsvorrichtung (101) ausgeführt wird, die Drahtloszugangsvorrichtung (101) gestartet wird, um den folgenden Schritte durchzuführen:
nach Deaktivieren des Drahtloskommunikationsmoduls, Durchführen von externem Laden unter Verwendung des Ladeparameters, der dem Normalzustand entspricht.

13. Drahtloszugangsvorrichtung (101) nach einem der Ansprüche 8 bis 12, wobei das Drahtloskommunikationsmodul ein Mobilkommunikationsmodul und ein Wi-Fi-Modul umfasst.

## Revendications

1. Procédé de commande de charge, comprenant :
l'activation, par un dispositif d'accès sans fil (101), d'un module de communications sans fil (401) ;
la détermination, par le dispositif d'accès sans fil (101), d'un état de charge externe (403) sur la base d'un état de réseau d'un réseau de communications auquel on accède et/ou d'un état d'alimentation du dispositif d'accès sans fil (402), l'état de charge externe comprenant un état de limitation de courant ou un état normal, un paramètre de charge correspondant à l'état de limitation de courant comprenant une première tension de charge et un premier courant de sortie maximal, un paramètre de charge correspondant à l'état normal comprenant une deuxième tension de charge et un deuxième courant de sortie maximal, la première tension de charge étant la même que la deuxième tension de charge, et le premier courant de sortie maximal étant inférieur au deuxième courant de sortie maximal ;
la détection (406), par le dispositif d'accès sans fil (101), d'un dispositif à charger (102) ;
la réalisation, par le dispositif d'accès sans fil (101), d'une négociation de charge avec le dispositif à charger (102) sur la base du paramètre de charge correspondant à l'état normal (405) ; et
la charge, par le dispositif d'accès sans fil (101), du dispositif à charger (102) sur la base d'un paramètre de charge correspondant à l'état de charge externe (408).

2. Procédé selon la revendication 1, la détermination, par le dispositif d'accès sans fil (101), d'un état de charge externe sur la base d'un état de réseau d'un réseau de communications auquel on accède et/ou d'un état d'alimentation comprenant :
si le dispositif d'accès sans fil (101) détermine qu'une condition prédéfinie est remplie, la détermination, par le dispositif d'accès sans fil (101), que l'état de charge externe est l'état de limitation de courant, la condition prédéfinie comprenant : le fait qu'un type de réseau du réseau de communications auquel on accède est un réseau 5G ou le fait qu'un niveau de batterie du dispositif d'accès sans fil (101) est inférieur à une valeur prédéfinie ; ou
si le dispositif d'accès sans fil (101) détermine que la condition prédéfinie n'est pas remplie, la détermination, par le dispositif d'accès sans fil (101), que l'état de charge externe est l'état normal.

3. Procédé selon la revendication 1 ou 2, la deuxième tension de charge correspondant à l'état normal étant de 9 V et le deuxième courant de sortie maximal étant de 2 A ; ou la deuxième tension de charge correspondant à l'état normal étant de 5 V et le deuxième courant de sortie maximal étant de 4,5 A.

4. Procédé selon la revendication 3, lorsque la deuxième tension de charge correspondant à l'état normal est de 9 V et que le deuxième courant de sortie maximal est de 2 A, le premier courant de sortie maximal est de 1,5 A.

5. Procédé selon l'une quelconque des revendications 1 à 4, le procédé comprenant en outre :
après la désactivation du module de communications sans fil, la réalisation, par le dispositif d'accès sans fil (101), d'une charge externe à l'aide du paramètre de charge correspondant à l'état normal.

6. Procédé selon l'une quelconque des revendications 1 à 5, le module de communications sans fil comprenant un module de communications mobiles et un module Wi-Fi.

7. Procédé de commande de charge selon la revendication 1, le procédé comprenant en outre l'activation, par le dispositif d'accès sans fil (101), d'un module de communications sans fil ;
le réglage, par le dispositif d'accès sans fil (101), de l'état de charge externe sur l'état de limitation de courant (404) ;
la charge, par le dispositif d'accès sans fil (101), du dispositif à charger (102) sur la base du paramètre de charge correspondant à l'état de limitation de courant ; et
si le dispositif d'accès sans fil (101) détermine, sur la base d'un état de réseau d'un réseau de communications auquel on accède et/ou d'un état d'alimentation du dispositif d'accès sans fil (101), que l'état de charge externe a changé, la charge, par le dispositif d'accès sans fil (101), du dispositif à charger (102) sur la base d'un paramètre de charge correspondant à un état de charge externe qui a changé (409).

8. Dispositif d'accès sans fil (101), comprenant un ou plusieurs processeurs, un module de communications sans fil, et une mémoire, la mémoire stockant un code ; et lorsque le code est exécuté par le dispositif d'accès sans fil (101), le dispositif d'accès sans fil (101) est activé pour réaliser les étapes suivantes :
l'activation du module de communications sans fil (401) ;
la détermination d'un état de charge externe sur la base d'un état de réseau d'un réseau de communications auquel on accède et/ou d'un état d'alimentation du dispositif d'accès sans fil (402), l'état de charge externe comprenant un état de limitation de courant ou un état normal, un paramètre de charge correspondant à l'état de limitation de courant comprenant une première tension de charge et un premier courant de sortie maximal, un paramètre de charge correspondant à l'état normal comprenant une deuxième tension de charge et un deuxième courant de sortie maximal, la première tension de charge étant la même que la deuxième tension de charge, et le premier courant de sortie maximal étant inférieur au deuxième courant de sortie maximal ;
la détection d'un dispositif à charger (102) ;
la réalisation d'une négociation de charge (407) avec le dispositif à charger sur la base du paramètre de charge correspondant à l'état normal; et
la charge du dispositif à charger (102) sur la base d'un paramètre de charge correspondant à l'état de charge externe.

9. Dispositif d'accès sans fil (101) selon la revendication 8, l'étape de détermination de l'état de charge externe sur la base de l'état de réseau du réseau de communications auquel on accède et/ou de l'état d'alimentation comprenant :
s'il est déterminé qu'une condition prédéfinie est remplie, la détermination, par le dispositif d'accès sans fil (101), que l'état de charge externe est l'état de limitation de courant, la condition prédéfinie comprenant : le fait qu'un type de réseau du réseau de communications auquel on accède est un réseau 5G ou le fait qu'un niveau de batterie du dispositif d'accès sans fil (101) est inférieur à une valeur prédéfinie ; ou
s'il est déterminé que la condition prédéfinie n'est pas remplie, la détermination, par le dispositif d'accès sans fil (101), que l'état de charge externe est l'état normal.

10. Dispositif d'accès sans fil (101) selon la revendication 8 ou 9, la deuxième tension de charge correspondant à l'état normal étant de 9 V et le deuxième courant de sortie maximal étant de 2 A ; ou
la deuxième tension de charge correspondant à l'état normal étant de 5 V et le deuxième courant de sortie maximal étant de 4,5 A.

11. Dispositif d'accès sans fil (101) selon la revendication 10, lorsque la deuxième tension de charge correspondant à l'état normal est de 9 V et que le deuxième courant de sortie maximal est de 2 A, le premier courant de sortie maximal est de 1,5 A.

12. Dispositif d'accès sans fil (101) selon l'une quelconque des revendications 8 à 11, lorsque le code est exécuté par le dispositif d'accès sans fil (101), le dispositif d'accès sans fil (101) est activé pour réaliser l'étape suivante :
après la désactivation du module de communications sans fil, la réalisation d'une charge externe à l'aide du paramètre de charge correspondant à l'état normal.

13. Dispositif d'accès sans fil (101) selon l'une quelconque des revendications 8 à 12, le module de communications sans fil comprenant un module de communications mobiles et un module Wi-Fi.
